(19) Europäisches Patentamt
European Patent Office
Office européen des brevets

(11) EP 2 950 651 B1

(12) **EUROPEAN PATENT SPECIFICATION**

(45) Date of publication and mention of the grant of the patent:
**20.06.2018 Bulletin 2018/25**

(21) Application number: **14701410.4**

(22) Date of filing: **27.01.2014**

(51) Int Cl.:
***A01N 43/653*** *(2006.01)* ***A01N 25/32*** *(2006.01)*

(86) International application number:
**PCT/EP2014/051530**

(87) International publication number:
**WO 2014/118129 (07.08.2014 Gazette 2014/32)**

(54) **METHOD FOR SAFENING**

VERFAHREN ZUM UNSCHÄDLICHMACHEN

PROCEDE DE PROTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2013 GB 201301975**

(43) Date of publication of application:
**09.12.2015 Bulletin 2015/50**

(73) Proprietor: **Syngenta Participations AG**
**4058 Basel (CH)**

(72) Inventors:
- **GODWIN, Jeremy Robert**
  **CH-4332 Stein (CH)**
- **HEMING, Alexander Mark**
  **CH-4333 Münchwilen (CH)**
- **SCHNEITER, Peter**
  **CH-4332 Stein (CH)**

(74) Representative: **Syngenta International AG**
**CHBS-B4.8**
**Schwarzwaldallee 215**
**4058 Basel (CH)**

(56) References cited:
**WO-A1-2009/000407** **WO-A2-2007/065843**
**US-A1- 2007 298 966**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a method for safening the phytotoxic effect of difenoconazole on a plant or plant propagation material.

More specifically, said method comprises applying to said plant or propagation material thereof, cloquintocet-mexyl and said difenoconazole.

It is known that some plant protecting agents, such as fungicides, may have a phytotoxic effect on crop plants. For example, F. Montfort et al., Pesticide Science 46(4), 1996, 315-322, report that the use of azole fungicides, such as triticonazole, for the treatment of seed and crop plants may have an adverse effect on plant growth. US2007/0298966 describes the use of safeners for increasing the activity of fungicides.

A particular type of phytotoxic effect that can limit the usefulness of some fungicides is chlorosis and desiccation of leaves which is manifested as a yellowing and/or browning of the leaves of the plant to which the fungicide is applied, which in some cases may occur when the fungicide is used at optimal levels for controlling fungi. Reducing the rate of fungicide application will normally reduce the leaf yellowing and/or browning effect, but then the fungicide will not be present at an optimal rate for controlling the fungi. There is a need for methods of preventing or at least mitigating the phytotoxic leaf-yellowing and/or browning effect mediated by some fungicides in order to maximise the potential of their fungicidal efficacy. The present invention seeks to address these needs.

There is a continuing need to find methods of protecting plants from phytopathogenic organisms, whilst limiting the impact of such methods on the environment. With the world's population increasing, there remains a need to generate even more efficient methods for maximising the output from the world's increasingly valuable and precious agricultural land. WO 2009/000407 and WO 2007/065843 are concerned with the lowering of toxic effect of fungicides like difenoconazole on plants by using resp. sulfosuccinates or giberellins as antidotes. It has now surprisingly been found that cloquintocet-mexyl can reduce / prevent the phytotoxic effect of the fungicide difenoconazole. Cloquintocet-mexyl therefore provides for a "safening" effect of the difenoconazole allowing it to be applied to the plants at levels which provide for excellent control of phytopathogenic fungi, whilst not being detrimental to the plant's health or appearance.

According to the present invention there is provided a method for safening the phytotoxic effect of difenoconazole comprising applying to a plant or propagation material thereof cloquintocet-mexyl and said difenoconazole. difenoconazole (1-[2-[2-chloro-4-(4-chlorophenoxy)phenyl]-4-methyl-1,3-dioxolan-2-ylmethyl]-1H-1,2,4-triazole) is a fungicide which is effective against a number of diseases caused by *Ascomycetes, Basidiomycetes* and *Deuteromycetes.* Difenoconazole is described in "The Pesticide Manual" [The Pesticide Manual - A World Compendium; Fourteenth Edition; Editor: C. D. S. Tomlin; The British Crop Protection Council] under the entry number 253.

Cloquintocet-mexyl- (1-methylhexyl [(5-chloro-8-quinolinyl)oxy]acetate) is known as a herbicide safener and is described in "The Pesticide Manual" [The Pesticide Manual - A World Compendium; Fourteenth Edition; Editor: C. D. S. Tomlin; The British Crop Protection Council] under the entry number 166.

The present invention further provides a method as described above wherein said cloquintocet-mexyl and said difenoconazole are applied simultaneously to said plant or said propagation material.

The present invention still further provides a method as described above wherein said cloquintocet-mexyl and said difenoconazole are applied via a composition comprising a mixture of said cloquintocet-mexyl and said difenoconazole. Where required, application of the cloquintocet-mexyl and difenoconazole, e.g. as a "combination" may be in a single "ready-mix" form, such as a ready-to-use formulation comprising the two components in a fixed ratio; or in a combined spray or application mixture composed from separate formulations of the single active ingredient components, e.g. a "tank-mix", or in a combined use of the individual ingredients when applied in common spray plan or schedule a sequential manner, i.e. one after the other with a reasonably short period, e.g. a few hours. When applied in separate sprays or seed applications following each other, the cloquintocet-mexyl should preferably be applied first for achieving the effect according to the present invention. The skilled person will appreciate that it may be possible to apply the difenoconazole first and then shortly thereafter apply the cloquintocet-mexyl and still obtain the safening effect of reduced / prevented phytotoxicity, however, it is preferred that the cloquintocet-mexyl is applied prior to and/or substantially at the same time as the difenoconazole.

When in use, any composition containing difenoconazole and cloquintocet-mexyl may also comprise additional active ingredients, e.g. insecticide, fungicide, nematicide, synergist, herbicide, plant growth regulator or a "plant health" promoting compound. Examples of active ingredients that can be added to the cloquintocet-mexyl and difenoconazole containing composition include all compounds listed in The Pesticide Manual (British Crop Production Council - ISBN No. 9781901396188) available at www.bcpc.org.

The composition containing difenoconazole and cloquintocet-mexyl according to the invention is of particular use in combination, with the following active ingredients - The numbers in parenthesis below mainly refer to the entry in The Pesticide Manual - Thirteenth Edition:

azoxystrobin (47), dimoxystrobin (226), fluoxastrobin (382), kresoxim-methyl (485), metominostrobin (551), orysastrobin, picoxystrobin (647), pyraclostrobin (690), trifloxystrobin (832), a compound of formula B-1.1

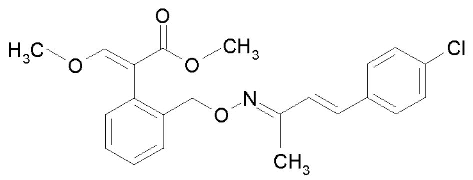

(B-1.1),

azaconazole (40), bromuconazole (96), cyproconazole (207), diniconazole (267), diniconazole-M (267), epoxiconazole (298), fenbuconazole (329), fluquinconazole (385), flusilazole (393), flutriafol (397), hexaconazole (435), imazalil (449), imibenconazole (457), ipconazole (468), metconazole (525), myclobutanil (564), oxpoconazole (607), pefurazoate (618), penconazole (619), prochloraz (659), propiconazole (675), prothioconazole (685), simeconazole (731), tebuconazole (761), tetraconazole (778), triadimefon (814), triadimenol (815), triflumizole (834), triticonazole (842), diclobutrazol (1068), etaconazole (1129), furconazole (1198), furconazole-cis (1199) and quinconazole (1378);

aldimorph (CAS Reg. No. 91315-15-0), dodemorph (288), fenpropimorph (344), tridemorph (830), fenpropidin (343), spiroxamine (740), piperalin (648), a compound of formula B-3.1

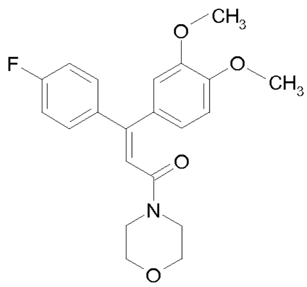

(B-3.1);

cyprodinil (208), mepanipyrim (508), pyrimethanil (705), anilazine (878), benalaxyl (56), benalaxyl-M, benodanil (896), benomyl (62), benthiavalicarb, benthiavalicarb-isopropyl (68), biphenyl (81), bitertanol (84), blasticidin-S (85), bordeaux mixture (87), boscalid (88), bupirimate (98), cadmium chloride, captafol (113), captan (114), carbendazim (116), carbon disulfide (945), carboxin (120), carpropamid (122), cedar leaf oil, chinomethionat (126), chloroneb (139), chlorothalonil (142), chlozolinate (149), cinnamaldehyde, copper, copper ammoniumcarbonate, copper hydroxide (169), copper octanoate (170), copper oleate, copper sulphate (87), cyazofamid (185), cycloheximide (1022), cymoxanil (200), dichlofluanid (230), dichlone (1052), dichloropropene (233), diclocymet (237), diclomezine (239), dicloran (240), diethofencarb (245), diflumetorim (253), dimethirimol (1082), dimethomorph (263), dinocap (270), dithianon (279), dodine (289), edifenphos (290), ethaboxam (304), ethirimol (1133), etridiazole (321), famoxadone (322), fenamidone (325), fenaminosulf (1144), fenamiphos (326), fenarimol (327), fenfuram (333), fenhexamid (334), fenoxanil (338), fenpiclonil (341), fentin acetate (347), fentin chloride, fentin hydroxide (347), ferbam (350), ferimzone (351), fluazinam (363), fludioxonil (368), flusulfamide (394), flutolanil (396), folpet (400), formaldehyde (404), fosetyl-aluminium (407), fthalide (643), fuberidazole (419), furalaxyl (410), furametpyr (411), flyodin (1205), fuazatine (422), hexachlorobenzene (434), hymexazole, iminoctadine tris(albesliate) (CAS Reg. No: 99257-43-9), iodocarb (3-Iodo-2-propynyl butyl carbamate), iprobenfos (IBP) (469), iprodione (470), iprovalicarb (471), isoprothiolane (474), kasugamycin (483), mancozeb (496), maneb (497), manganous dimethyldithiocarbamate, mefenoxam (Metalaxyl-M) (517), mepronil (510), mercuric chloride (511), mercury, metalaxyl (516), methasulfocarb (528), metiram (546), metrafenone, nabam (566), neem oil (hydrophobic extract), nuarimol (587), octhilinone (590), ofurace (592), oxadixyl (601), oxine copper (605), oxolinic acid (606), oxycarboxin (608), oxytetracycline (611), paclobutrazole (612), paraffin oil (628), paraformaldehyde, pencycuron (620), pentachloronitrobenzene (716), pentachlorophenol (623), penthiopyrad, perfurazoate, phosphoric acid, polyoxin (654), polyoxin D zinc salt (654), potassium bicarbonate, probenazole (658), procymidone (660), propamocarb (668), propineb (676), proquinazid (682), prothiocarb (1361), pyrazophos (693), pyrifenox (703), pyroquilon (710), quinoxyfen (715), quintozene (PCN(B) (716), silthiofam (729), sodium bicarbonate, sodium diacetate, sodium propionate, streptomycin (744), sulphur (754), TCMTB, tecloftalam, tecnazene (TCN(B) (767), thiabendazole (790), thifluzamide (796), thiophanate (1435), thiophanate-methyl (802), thiram (804), tolclofos-methyl (808), tolylfluanid (810), triazoxide (821), trichoderma harzianum (825), tricyclazole (828), triforine (838), triphenyltin hydroxide (347), validamycin (846), vinclozolin (849), zineb (855), ziram (856), zoxamide

(857), 1,1-bis(4-chlorophenyl)-2-ethoxyethanol (IUPAC-Name) (910), 2,4-dichlorophenyl benzenesulfonate (IUPAC- / Chemical Abstracts-Name) (1059), 2-fluoro-N-methyl-N-1-naphthylacetamide (IUPAC-Name) (1295), 4-chlorophenyl phenyl sulfone (IUPAC-Name) (981),

a compound of formula B-5.1

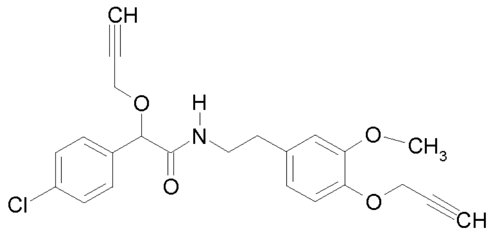

(B-5.1);

a compound of formula B-5.2

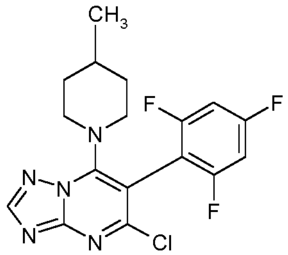

(B-5.2);

a compound of formula B-5.3

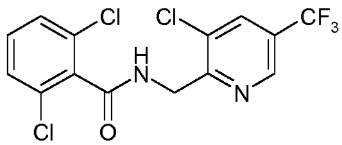

(B-5.3),

a compound of formula B-5.4

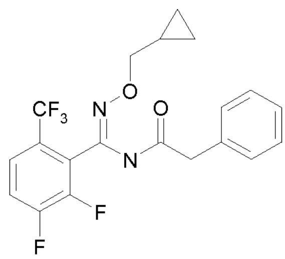

(B-5.4),

a compound of formula B-5.5

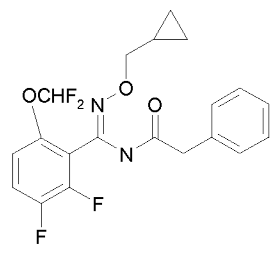

(B-5.5),

a compound of formula B-5.6

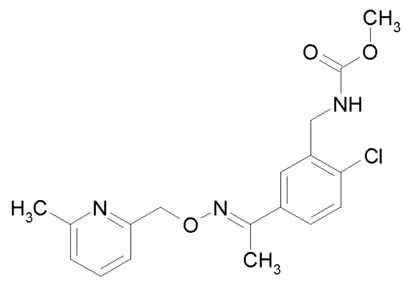

(B-5.6),

a compound of formula B-5.7

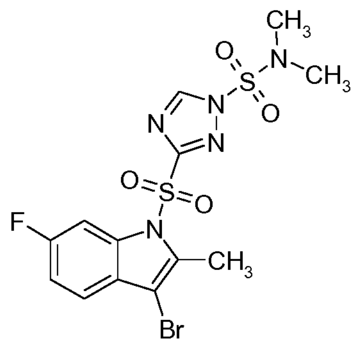

(B-5.7),

3-difluoromethyl-1-methyl-1H-pyrazole-4-carboxylic acid (2-bicyclopropyl-2-yl-phenyl)-amide (compound B-5.8), 3-difluoromethyl-1-methyl-1H-pyrazole-4-carboxylic acid (9-isopropyp-1,2,3,4-tetrahydro-1,4-methano-naphthalen-5-yl)-amide (compound B-5.9), 1,3-dimethyl-5-fluoro-1H-pyrazole-4-carboxylic acid [2-(1,3-dimethylbutyl)phenyl]-amide (compound B-5.10), 3-difluoromethyl-1-methyl-1H-pyrazole-4-carboxylic acid (3',4'-dichloro-5-fluoro-1,1'-biphenyl-2-yl)-amide (compound B-5.11, bixafen), N-{2-[3-chloro-5-(trifluoromethyl)pyridin-2-yl]ethyl}-2-(trifluoromethyl)benzamid (compound B-5.12, fluopyram), 3-difluoromethyl-1-methyl-1H-pyrazole-4-carboxylic acid N-[2-(1,1,2,2-tetrafluoroethoxy)phenyl]-amide (compound B-5.13), 3-difluoromethyl-1-methyl-1H-pyrazole-4-carboxylic acid N-[2-(1,1,2,3,3,3-hexafluoropropoxy)phenyl]-amide (compound B-5.14), 3-difluoromethyl-1-methyl-1H-pyrazo le-4-carboxylic acid N-[2-(2-chloro-1,1,2-trifluoroethoxy)phenyl]-amide (compound B-5.15), 3-difluoromethyl-1-methyl-1H-pyrazo le-4-carboxylic acid-(4'-trifluoromethyl-biphen-2-yl)-amide (compound B-5.16), 3-difluoromethyl-1-methyl-1H-pyrazole-4-carboxylic acid N-(2'-trifluoromethyl-biphen-2-yl)-amide (compound B-5.17) and 3-difluoromethyl-1-methyl-1H-pyrazole-4-carboxylic acid N-(2'-trifluoromethyl-biphen-2-yl)-amide (compound B-5.18), acibenzolar-S-methyl (6), chlormequat chloride (137), ethephon (307), mepiquat chloride (509) and trinexapac-ethyl (841), abamectin (1), clothianidin (165), emamectin benzoate (291), imidacloprid (458), tefluthrin (769), thiamethoxam (792), glyphosate (419),
a compound of formula V

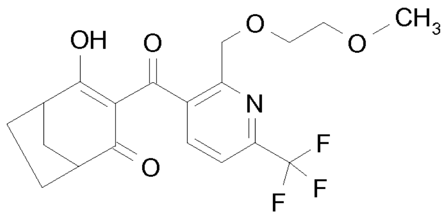

(V),

fomesafen, isopyrazam, sedaxane, a compound of formula (VI)

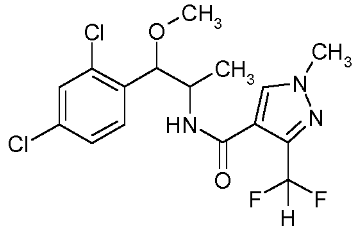

(VI),

a compound of formula (VII)

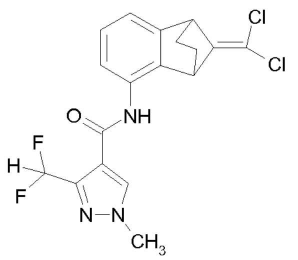

(VII),

1-[4-[4-[(5S)5-(2,6-difluorophenyl)-4,5-dihydro-1,2-oxazol-3-yl]-1,3-thiazol-2-yl]piperidin-1-yl]-2-[5-methyl-3-(trifluoromethyl)-1H-pyrazol-1-yl]ethanone, 1-[4-[4-[5-(2,6-difluorophenyl)-4,5-dihydro-1,2-oxazol-3-yl]-1,3-thiazol-2-yl]piperidin-1-yl]-2-[5-methyl-3-(trifluoromethyl)-1H-pyrazol-1-yl]ethanone, fluxapyroxad, phosphorous acid, phosphorous acid sodium salt and phosphorous acid ammonium salt.

Preferred mixtures of the composition containing difenoconazole and cloquintocet-mexyl according to the invention (referred to in the following lists as difenoconazole) include: difenoconazole and cyproconazole; difenoconazole and propiconazole; difenoconazole and chlorothalonil; difenoconazole and paclobutrazole; difenoconazole and isopyrazam; difenoconazole and azoxystrobin; difenoconazole and azoxystrobin and fludioxonil; difenoconazole and fludioxonil; difenoconazole and cyprodonil; difenoconazole and acibenzolar-s-methyl; difenoconazole and pyraclostrobin; difenoconazole and cyflufenamid; difenoconazole and fenpropidin; difenoconazole and mefenoxam; difenoconazole and thiamethoxam; difenoconazole and metrafenone; difenoconazole and tebuconazole; difenoconazole and penconazole; difenoconazole and epoxiconazole; difenoconazole and prothioconazole; difenoconazole and mefenoxam; difenoconazole and ipconazole; difenoconazole and hexaconazole; difenoconazole and abamectin; difenoconazole and trinexapac; difenoconazole and 1-Methylcyclopropene; difenoconazole and tricyclazole; difenoconazole and lambda cyhalothrin; difenoconazole and S-Metolachlor; difenoconazole and mesotrione; difenoconazole and one of the compounds mentioned in WO2010/063700; difenoconazole and one of the succinate dehydrogenase inhibitor (SDHI) class of fungicides; difenoconazole and benodanil, difenoconazole and flutolanil; difenoconazole and mepronil; difenoconazole and fluopyram; difenoconazole and fenfuram; difenoconazole and carobxin oxycarboxin; difenoconazole and thifluzamide; difenoconazole and bixafen; difenoconazole and furametpyr; difenoconazole and isopyrazam; difenoconazole and penflufen; difenoconazole and penthiopyrad; difenoconazole and sedaxane; difenoconazole and fluxapyroxad and difenoconazole and boscalid.

Even more preferred mixtures of the composition containing difenoconazole and cloquintocet-mexyl according to the invention (referred to in the following lists as difenoconazole) include:

difenoconazole and benzovindiflupyr (benzovindiflupyr is 3-difluoromethyl-1-methyl-1H-pyrazole-4-carboxylic acid

(9-dichloromethylene-1,2,3,4-tetrahydro-1,4-methano-naphthalen-5-yl)-amide and its microbicidal properties are described for example in WO 2007/048556); difenoconazole and chlorothalonil; difenoconazole and folpet; difenoconazole and propiconazole; difenoconazole and prothioconazole; difenoconazole and isopyrazam; difenoconazole and fenpropidin; difenoconazole and propiconazole and chlorothalonil; difenoconazole and propiconazole and fenpropidin; difenoconazole and benzovindiflupyr and prothioconazole; difenoconazole and propiconazole and azoxystrobin; difenoconazole and propiconazole and chlorothalonil; difenoconazole and cyproconazole and propiconazole; difenoconazole and propiconazole and folpet;
difenoconazole and benzovindiflupyr and chlorothalonil; difenoconazole and benzovindiflupyr and propiconazole; difenoconazole and benzovindiflupyr and isopyrazam; difenoconazole and benzovindiflupyr and azoxystrobin; difenoconazole and benzovindiflupyr and fenpropidin; difenoconazole and benzovindiflupyr and folpet;
difenoconazole and benzovindiflupyr and cyproconazole; difenoconazole and benzovindiflupyr and boscalid; difenoconazole and benzovindiflupyr and bixafen;
difenoconazole and benzovindiflupyr and penthiopyrad; and difenoconazole and benzovindiflupyr and fluxapyroxad.

In a still further embodiment of the invention there is provided a composition containing difenoconazole and cloquintocet-mexyl according to the invention and the compound of formula (I):

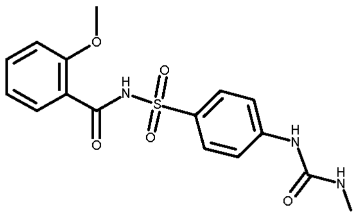
(I).

The compound of formula (I), namely:

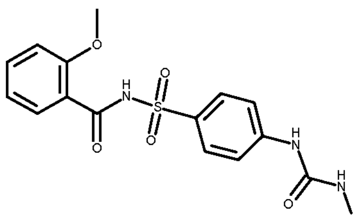
(I)

is described in WO2009/056333 and EP0365484. In the former reference, the compound of formula (I) is described as a safener for protecting rice crops from the phytotoxic action of herbicides by dressing the seed material with the compound of formula (I). This compound may be synthesised by the person skilled in the art using standard techniques along with the information mentioned in the above references.

In a still further embodiment of the invention there is provided a composition containing difenoconazole and cloquintocet-mexyl according to the invention and abscisic acid. Abscisic acid (ABA) is also known as abscisin II and dormin. It has the formula S-(Z,E)]-5-(1-Hydroxy-2,6,6-trimethyl-4-oxo-2-cyclohexen-1-yl)-3-methyl-2,4-pentanedienoic acid:

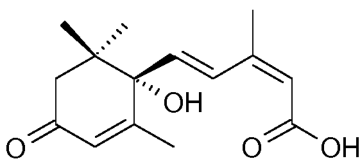

Abscisic acid is known to play a role in how plants respond to weather stresses such as cold and drought. WO 2007/008580 describes methods of imparting increased stress resistance on a plant, in particular increasing plant drought and cold resistance, by application of abscisic acid and one or more specific triazole compounds. WO 2010/015337 describes the use of specific azoles for increasing the resistance of plants to abiotic stress factors.

In a still further embodiment of the invention there is provided a composition containing difenoconazole and

cloquintocet-mexyl according to the invention and abscisic acid and the compound of formula (I).

Such a combination as described above can be used in any of the methods as described in this document and the combinations provide a synergistic effect. A synergistic effect exists whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per liter of spray mixture
X = % action by active ingredient A) using p ppm of active ingredient
Y = % action by active ingredient B) using q ppm of active ingredient.

According to COLBY, the expected (additive) action of active ingredients A)+B) using p+q ppm of active ingredient is

$$E = X + Y - \frac{X \cdot Y}{100}$$

If the action actually observed (O) is greater than the expected action (E), then the action of the combination is superadditive, i.e. there is a synergistic effect. In mathematical terms the synergism factor SF corresponds to O/E. In the agricultural practice an SF of $\geq 1.2$ indicates significant improvement over the purely complementary addition of activities (expected activity), while an SF of $\leq 0.9$ in the practical application routine signals a loss of activity compared to the expected activity.

However, besides the actual synergistic action with respect to fungicidal activity, the compositions according to the invention also have further surprising advantageous properties which can also be described, in a wider sense, as synergistic activity. Examples of such advantageous properties that may be mentioned are: a broadening of the spectrum of fungicidal activity to other phytopathogens, for example to resistant strains; a reduction in the rate of application of the active ingredients; synergistic activity against animal pests, such as insects or representatives of the order Acarina; a broadening of the spectrum of pesticidal activity to other animal pests, for example to resistant animal pests; adequate pest control with the aid of the compositions according to the invention, even at a rate of application at which the individual compounds are totally ineffective; advantageous behaviour during formulation and/or upon application, for example upon grinding, sieving, emulsifying, dissolving or dispensing; increased storage stability; improved stability to light; more advantageous degradability; improved toxicological and/or ecotoxicological behaviour; improved characteristics of the useful plants including: emergence, crop yields, more developed root system, tillering increase, increase in plant height, bigger leaf blade, less dead basal leaves, stronger tillers, greener leaf colour, less fertilizers needed, less seeds needed, more productive tillers, earlier flowering, early grain maturity, less plant verse (lodging), increased shoot growth, improved plant vigour, and early germination; or any other advantages familiar to a person skilled in the art.

In a particular embodiment of the invention there is provided the method as described above wherein said cloquintocet-mexyl is applied to said plant or said propagation material prior to the application of said difenoconazole.

Also disclosed is a method as described above wherein said cloquintocet-mexyl and said difenoconazole are applied to a locus where the plant propagation material is sown/placed and/or where the plant is grown.

The present invention still further provides a method as described above wherein said phytotoxic effect causes a yellowing and/or browning of the leaves of the plant.

The present invention still further provides a method as described above wherein said difenoconazole and said cloquintocet-mexyl are applied in a weight ratio of between, in order of increasing preference: difenoconazole : cloquintocet-mexyl - 2000:1 and 1:2000, 1000 : 1 and 1 : 1000, 500 : 1 and 1: 500, 100:1 and 1:100, 50:1 and 1:50, 40:1 and 1:40, 20:1 and 1:20, 10:1 and 1:10, 5:1 and 1:5, and 1:1 .

The present invention still further provides a method as described above wherein said plant or said plant propagation material is a cereal plant or cereal plant propagation material. In a particular embodiment of the invention said cereal plant or said cereal plant propagation material is wheat.

In a further aspect of the invention there is provided the use of cloquintocet-mexyl to safen the phytotoxicity of difenoconazole.

In a further embodiment of the invention there is provided the use of cloquintocet-mexyl in a method of reducing or preventing the phytotoxic effect of difenoconazole via application of said cloquintocet-mexyl to a plant or propagation material thereof, wherein difenoconazole is also applied to said plant or propagation material thereof.

In a still further aspect of the invention there is provided a method for reducing or preventing the phytotoxic effect of difenoconazole comprising applying to a plant or propagation material thereof cloquintocet-mexyl and said

difenoconazole.

According to the invention "plants" typically comprise the following species of plants: grape vines; cereals, such as wheat, barley, maize, rice, rye or oats; beet, such as sugar beet or fodder beet; fruits, such as pomes, stone fruits or soft fruits, for example apples, pears, plums, peaches, almonds, cherries, strawberries, raspberries or blackberries; leguminous plants, such as beans, lentils, peas or soybeans; oil plants, such as rape, mustard, poppy, olives, sunflowers, coconut, castor oil plants, cocoa beans or groundnuts; cucumber plants, such as marrows, cucumbers or melons; fibre plants, such as cotton, flax, hemp or jute; citrus fruit, such as oranges, lemons, grapefruit or mandarins; vegetables, such as spinach, lettuce, asparagus, cabbages, carrots, onions, tomatoes, potatoes, cucurbits or paprika; lauraceae, such as avocados, cinnamon or camphor; maize; tobacco; nuts; coffee; sugar cane; tea; vines; hops; durian; bananas; natural rubber plants; turf or ornamentals, such as flowers, shrubs, broad-leaved trees or evergreens, for example conifers. This list does not represent any limitation.

Cereals, particularly wheat, rice, maize and barley are of particular interest for the invention, particularly wheat.

The terms "plant" and "plants" also includes plants which have been rendered resistant to herbicides, insecticides, fungicides or have been modified in some other way such as to enhance yield, drought tolerance or quality via conventional methods of breeding or by genetic engineering methods. Any genetically modified plants used in accordance with the present invention may have been modified via recombinant nucleic acid techniques well known to the person skilled in the art.

The term "locus" is intended to embrace the place on which the plants are growing, where the plant propagation materials are sown or where the plant propagation materials will be placed for growth such as a media or soil. An example of a locus is a field, on which crop plants are growing.

The term "plant propagation material" is understood to denote generative parts of the plant, such as seeds, which can be used for the multiplication of the latter, and vegetative material, such as cuttings or tubers, for example, roots, fruits, tubers, bulbs, rhizomes and parts of plants. Germinated plants and young plants which are to be transplanted after germination or after emergence from the soil, are also included in this definition. These young plants may be protected before transplantation by a total or partial treatment by immersion. Preferably "plant propagation material" is understood to denote seeds.

The terms "safening", "safener" and "safen" all relate to the reduction and/or prevention of the phytotoxic effect of difenoconazole. The reduction / prevention of the phytotoxic effect can be measured by comparison with a control-like plant/propagation material which has been treated with the same amount of difenoconazole but has not been treated with the cloquintocet-mexyl in accordance with the invention. The person skilled in the art is well aware how to perform properly controlled experiments and thus can make a comparison assessment by growing two groups of plants of the same species/variety under the same conditions wherein only one of said groups (being the plant, or propagation material) has been treated with cloquintocet-mexyl and difenoconazole thereby enabling said skilled person to ascertain the reduction / prevention of the phytotoxic effect on the cloquintocet-mexyl treated plant/plant propagation material when compared with the non cloquintocet-mexyl treated control-like plant/plant propagation material.

In a still further aspect, the present invention also provides the mixture of cloquintocet-mexyl and difenoconazole as described above to provide crop enhancement effects of the resulting plants. In addition to the crop enhancement effects already known for the mixture of cloquintocet-mexyl and difenoconazole as described above, further crop enhancement effects may be achieved.

The term 'crop enhancement' means an improvement in plant vigour, an improvement in plant quality and/or improved tolerance to stress factors.

According to the present invention, an 'improvement in plant vigour' means that certain traits are improved qualitatively or quantitatively when compared with the same trait in a control plant which has been grown under the same conditions in the absence of the method of the invention. Such traits include, but are not limited to, early and/or improved germination, improved emergence, the ability to use less seeds, increased root growth, a more developed root system, increased root nodulation, increased shoot growth, increased tillering, stronger tillers, more productive tillers, increased or improved plant stand, less plant verse (lodging), an increase and/or improvement in plant height, an increase in plant weight (fresh or dry), bigger leaf blades, greener leaf colour, increased pigment content, increased photosynthetic activity, earlier flowering, longer panicles, early grain maturity, increased seed, fruit or pod size, increased pod or ear number, increased seed number per pod or ear, increased seed mass, enhanced seed filling, less dead basal leaves, delay of senescence, improved vitality of the plant, increased levels of amino acids in storage tissues and/or less inputs needed (e.g. less fertiliser, water and/or labour needed). A plant with improved vigour may have an increase in any of the aforementioned traits or any combination or two or more of the aforementioned traits.

According to the present invention, an 'improvement in plant quality' means that certain traits are improved qualitatively or quantitatively when compared with the same trait in a control plant which has been grown under the same conditions in the absence of the method of the invention. Such traits include, but are not limited to, improved visual appearance of the plant, reduced ethylene (reduced production and/or inhibition of reception), improved quality of harvested material, e.g. seeds, fruits, leaves, vegetables (such improved quality may manifest as improved visual appearance of the harvested material), improved carbohydrate content (e.g. increased quantities of sugar and/or starch, improved sugar acid ratio, reduction of reducing sugars, increased rate of development of sugar), improved protein content, improved oil content and composition, improved nutritional value, reduction in anti-nutritional compounds, improved organoleptic properties (e.g. improved taste) and/or improved consumer health benefits (e.g. increased levels of vitamins and anti-oxidants)), improved post-harvest characteristics (e.g. enhanced shelf-life and/or storage stability, easier processability, easier extraction of compounds) and/or improved seed quality (e.g. for use in following seasons). A plant with improved quality may have an increase in any of the aforementioned traits or any combination or two or more of the aforementioned traits.

According to the present invention, an 'improved tolerance to stress factors' means that certain traits are improved qualitatively or quantitatively when compared with the same trait in a control plant which has been grown under the same conditions in the absence of the method of the invention. Such traits include, but are not limited to, an increased tolerance and/or resistance to abiotic stress factors which cause sub-optimal growing conditions such as drought (e.g. any stress which leads to a lack of water content in plants, a lack of water uptake potential or a reduction in the water supply to plants), cold exposure, heat exposure, osmotic stress, UV stress, flooding, increased salinity (e.g. in the soil), increased mineral exposure, ozone exposure, high light exposure and/or limited availability of nutrients (e.g. nitrogen and/or phosphorus nutrients). A plant with improved tolerance to stress factors may have an increase in any of the aforementioned traits or any combination or two or more of the aforementioned traits. In the case of drought and nutrient stress, such improved tolerances may be due to, for example, more efficient uptake, use or retention of water and nutrients.

Any or all of the above crop enhancements may lead to an improved yield by improving e.g. plant physiology, plant growth and development and/or plant architecture. In the context of the present invention 'yield' includes, but is not limited to, (i) an increase in biomass production, grain yield, starch content, oil content and/or protein content, which may result from (a) an increase in the amount produced by the plant per se or (b) an improved ability to harvest plant matter, (ii) an improvement in the composition of the harvested material (e.g. improved sugar acid ratios, improved oil composition, increased nutritional value, reduction of anti-nutritional compounds, increased consumer health benefits) and/or (iii) an increased/facilitated ability to harvest the crop, improved processability of the crop and/or better storage stability/shelf life. Increased yield of an agricultural plant means that, where it is possible to take a quantitative measurement, the yield of a product of the respective plant is increased by a measurable amount over the yield of the same product of the plant produced under the same conditions, but without application of the present invention. According to the present invention, it is preferred that the yield be increased by at least 0.5%, more preferred at least 1%, even more preferred at least 2%, still more preferred at least 4% , preferably 5% or even more.

Any or all of the above crop enhancements may also lead to an improved utilisation of land, i.e. land which was previously unavailable or sub-optimal for cultivation may become available. For example, plants which show an increased ability to survive in drought conditions, may be able to be cultivated in areas of sub-optimal rainfall, e.g. perhaps on the fringe of a desert or even the desert itself.

When applied to the plants in accordance with the use / method of the invention, difenoconazole (a.i.) is typically applied at a rate of 5 to 2000 g a.i./ha, particularly 10 to 1000 g a.i./ha, e.g. 50, 75, 100 or 200 g a.i./ha, 0.5 to 1000 g/ha, preferably 1 to 750 g/ha, more preferably 2.5 to 500 g/ha, more preferably 5 to 300 g/ha, more preferably 7.5 to 200 g/ha of a.i.. In a preferred embodiment the difenoconazole according to the invention is applied to crops at a rate up to about 130 g a.i./ha, preferably up to about 125g a.i./ha.

In agricultural practice the application rates of the compositions according to the use / method of the invention depend on the type of effect desired, and typically range from 20 to 4000 g of total composition per hectare.

When difenoconazole is used for treating seed, rates of 0.001 to 50 g of difenoconzole per kg of seed, preferably from 0.01 to 10g per kg of seed, are generally sufficient.

The composition containing cloquintocet-mexyl and difenoconazole and any mixtures with other compounds as described above may be employed as a formulation in any conventional form, for example in the form of a twin pack, a powder for dry seed treatment (DS), an emulsion for seed treatment (ES), a flowable concentrate for seed treatment (FS), a solution for seed treatment (LS), a water dispersible powder for seed treatment (WS), a capsule suspension for seed treatment (CF), a gel for seed treatment (GF), an emulsion concentrate (EC), a suspension concentrate (SC), a suspo-emulsion (SE), a capsule suspension (CS), a water dispersible granule (WG), an emulsifiable granule (EG), an emulsion, water in oil (EO), an emulsion, oil in water (EW), a microemulsion (ME), an oil dispersion (OD), an oil miscible flowable (OF), an oil miscible liquid (OL), a soluble concentrate (SL), an ultra-low volume suspension (SU), an ultra-low volume liquid (UL), a technical concentrate (TK), a dispersible concentrate (DC), a wettable powder (WP) or any technically feasible formulation in combination with agriculturally acceptable adjuvants.

Such mixtures and compositions may be produced in manner well known to the person skilled in the art, e.g. by mixing the active ingredients with at least one appropriate inert formulation adjuvant (for example, diluents, solvents, fillers) and optionally other formulating ingredients such as surfactants, biocides, anti-freeze, stickers, thickeners and compounds that provide adjuvancy effects. Also slow release formulations may be employed where long lasting efficacy is intended. Particularly formulations to be applied in spraying forms, such as water dispersible concentrates (e.g. EC,

SC, DC, OD, SE, EW, EO and the like), wettable powders and granules, may contain surfactants such as wetting and dispersing agents and other compounds that provide adjuvancy effects, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

Formulation ingredients well known to the person skilled in the art may, for example, include those formulation ingredients that do not have any significant biological activity, or have no biological activity. They include, for example, diluents, solvents, fillers, surfactants, biocides, anti-freeze, stickers, thickeners and compounds that provide adjuvancy effects.

A seed dressing formulation is applied in a manner known to the person skilled in the art, e.g. as an aqueous suspension or in a dry powder form having good adherence to the seeds. Such seed dressing formulations are known in the art. Seed dressing formulations may contain the single active ingredients or the combination of active ingredients in encapsulated form, e.g. as slow release capsules or microcapsules. A typical a tank-mix formulation for seed treatment application comprises 0.25 to 80%, especially 1 to 75 %, of the desired ingredients, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation. A typical pre-mix formulation for seed treatment application comprises 0.5 to 99.9 %, especially 1 to 95 %, of the desired ingredients, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

In general, the formulations include from 0.01 to 90% by weight of active agent, from 0 to 20% agriculturally acceptable surfactant and 10 to 99.99% solid or liquid formulation inerts and adjuvant(s), the active agent consisting of at least cloquintocet-mexyl and difenoconazole and optionally other active agents, including those mentioned above and/or microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ diluted formulations.

The Examples which follow serve to illustrate the invention. The invention is not limited to these Examples.

Source of wheat.

Wheat seed (variety "Riband") were sown in 6.5 cm diameter pots with typically 6 seeds per pot. The growing media comprised 66.5% TKS1 peat soil, 30% sugar beet soil and 3.5% sand. The seeds were covered with a fine layer of soil and the pots were watered. Within a day of sowing the pots were treated with 5 mL of a solution of the growth regulator trinexapac-ethyl (Moddus 250 EC™ from Syngenta) diluted 1 part in 1000 parts water. The pots were kept in a controlled environment room at 19 °C constant temperature, 60% relative humidity and a 14 hour day length until test treatment at which time the plants were around 3 weeks old. Plant density was reduced to typically 4 plants per pot prior to application of the test treatments.

Source of cloquintocet-mexyl.

A wettable powder (WP) formulation of cloquintocet-mexyl was prepared by mixing the following composition in a high-speed twin bladed mixer.

| | | |
|---|---|---|
| Cloquintocet-mexyl | 25 parts | Technical material from Syngenta |
| Pergopak M | 5 parts | From Martinwerk GmbH, Bergheim, Germany |
| Sapogenat T110 | 3 parts | From Clariant, Germany |
| Ultravon W 300% | 2 parts | From Hoechst, Germany |
| Empicol 0555 | 2 parts | From Huntsman, USA |
| Disperagtor H | 4 parts | Neveos AG, Basel, Switzerland |
| Kaolin clay | 59 parts | AGS Blancs, Paris |

Method of application.

Formulated difenoconazole ('Score' 250EC™ from Syngenta) was mixed with water and ultrasonically agitated in order to achieve a homogeneous emulsion. Spray solutions were then made with 9 parts water to 1 part isopropanol by volume. The cloquintocet-mexyl WP was added and the spray mixture mechanically stirred just before spraying to ensure homogeneity. The test treatments were applied to using a track-sprayer with a single flat-fan nozzle at a height

of 60 cm and calibrated to apply the equivalent of 200 litres per hectare.

Example 1.

This example demonstrates that addition of cloquintocet-mexyl to foliar applications of difenoconazole reduces the phytotoxic damage caused by the fungicide on wheat. The symptoms of phytotoxicity on wheat caused by difenoconazole included chlorosis and/or necrosis. Phytotoxicity was assessed as percentage damage of the plant at both 7 and 14 days after application and the results shown in Table 1.

Table 1.

| Difenoconazole (grams/ litre) | Cloquintocet-mexyl (grams/ litre) | Phytotoxicity 7DAA (% to 0 d.p.) | Phytotoxicity 14DAA (% to 0 d.p.) |
|---|---|---|---|
| 1.25 | - | 35 | 45 |
| 0.625 | - | 20 | 30 |
| 1.25 | 0.50 | 3 | 10 |
| 0.625 | 0.50 | 2 | 2 |
| 1.25 | 0.25 | 4 | 5 |
| 0.625 | 0.25 | 2 | 5 |
| 1.25 | 0.125 | 4 | 30 |
| 0.625 | 0.125 | 0 | 10 |

Example 2.

This example demonstrates that addition of cloquintocet-mexyl to foliar applications of difenoconazole has no adverse effect on the fungicidal activity. The fungicidal efficacy of difenoconazole was assessed in both preventative and curative tests versus *Puccinia recondite* f.sp. *tritici* (brown rust) on variety "Arina" wheat and *Mycosphaerella graminicola* (*Septoria tritici*) (Septoria tritici leaf spot) on variety "Riband" wheat.

Preventative test versus *Puccinia recondita* f.sp. *tritici*

Two week old plants were treated with the test spray and then one day later inoculated by spraying them with a spore suspension. After an incubation period of one day at 20 °C and 95 % relative humidity the inoculated test plants were kept at typically 20/18 °C (day/night) and 60% relative humidity in a glasshouse. The percentage leaf area affected by disease was assessed 12 days after application and the test was replicated on two dates. Disease control relative to untreated check plants was then calculated and shown in table 2.

Curative test versus *Puccinia recondita* f.sp. *tritici*

Two week old plants were inoculated by spraying them with a spore suspension and keeping for an incubation period of two days at 20 °C and 95 % relative humidity. The plants were subsequently treated with the test spray and maintained at typically 20/18 °C (day/night) and 60% relative humidity in a glasshouse. The percentage leaf area affected by disease was assessed 12 days after application and the test was replicated on two dates. Disease control relative to untreated check plants was then calculated and shown in table 2.

Preventative test versus *Mycosphaerella graminicola* (*Septoria tritici*)

Two week old plants were treated with the test spray and then one day later inoculated by spraying them with a spore suspension. After an incubation period of one day at 22/21 °C (day/night) and 95 % relative humidity the inoculated test plants were kept at typically 22 /21 °C (day/night) and 70% relative humidity in a greenhouse. The percentage leaf area affected by disease was assessed 15 days after application and the test was replicated on two dates. Disease control relative to untreated check plants was then calculated and shown in table 2.

Curative test versus *Mycosphaerella graminicola* (*Septoria tritici*)

Two week old plants were inoculated by spraying them with a spore suspension and given an incubation period of 2 days at typically 22/21°C (day/night) and 95 % relative humidity. The plants were subsequently sprayed with the test substance and then maintained at 22/21°C (day/night) and 70% relative humidity in a greenhouse. The percentage leaf area affected by disease was assessed 12 days after application and the test was replicated on two dates. Disease control relative to untreated check plants was then calculated and shown in table 2.

Table 2.

| Difenoconazole (grams/litre) | Cloquintocet -mexyl (grams/litre) | Prev. Pucc. rec. | | Cur. Pucc. rec. | | Prev. Sept. trit. | | Cur. Sept. trit. | |
|---|---|---|---|---|---|---|---|---|---|
| | | 1 | 2 | 1 | 2 | 1 | 2 | 1 | 2 |
| 4.05 | - | | | | | 80 | 83 | | |
| 1.35 | - | 100 | 100 | | | 80 | 80 | 77 | 74 |
| 0.45 | - | 100 | 100 | | | 70 | 77 | 84 | 69 |
| 0.15 | - | 99 | 98 | 100 | 100 | 67 | 13 | 63 | 43 |
| 0.05 | - | 99 | 85 | 98 | 99 | 13 | 3 | 56 | 34 |
| 0.02 | - | 92 | 0 | 98 | 90 | | | | 27 |
| 0.01 | - | | | 93 | 58 | | | | |
| 0.004 | - | | | 83 | 13 | | | | |
| 4.05 | 0.5 | | | | | 80 | 63 | | |
| 1.35 | 0.5 | 100 | 98 | | | 67 | 47 | 80 | 79 |
| 0.45 | 0.5 | 99 | 95 | | | 30 | 7 | 79 | 81 |
| 0.15 | 0.5 | 83 | 71 | 100 | 100 | 3 | 0 | 25 | 58 |
| 0.05 | 0.5 | 79 | 58 | 100 | 100 | 3 | 0 | 9 | 19 |
| 0.02 | 0.5 | 58 | 42 | 98 | 98 | | | 28 | 17 |
| 0.01 | 0.5 | | | 83 | 63 | | | | |

## Claims

1. A method for safening the phytotoxic effect of difenoconazole comprising applying to a plant or propagation material thereof cloquintocet-mexyl and said difenoconazole.

2. A method according to claim 1 wherein said cloquintocet-mexyl and said difenoconazole are applied simultaneously to said plant or said propagation material.

3. A method according to claim 1 or claim 2 wherein said cloquintocet-mexyl and said difenoconazole are applied via a composition comprising a mixture of said cloquintocet-mexyl and said difenoconazole.

4. A method according to claim 1 wherein said cloquintocet-mexyl is applied to said plant or said propagation material prior to the application of said difenoconazole.

5. A method according to any of the preceding claims wherein said phytotoxic effect causes a yellowing and/or browning of the leaves of the plant.

6. A method according to any one of the preceding claims wherein said cloquintocet-mexyl and said difenoconazole are applied in a ratio of between 1:50 and 50:1, difenoconazole : cloquintocet-mexyl.

7. A method according to any one of the preceding claims wherein said plant or said plant propagation material is a

cereal plant or cereal plant propagation material.

8. A method according to claim 7 wherein said cereal is wheat.

9. Use of cloquintocet-mexyl to safen the phytotoxicity of difenoconazole.

**Patentansprüche**

1. Verfahren zum "Safening" der phytotoxischen Wirkung von Difenoconazol, bei dem man Cloquintocet-Mexyl sowie das Difenoconazol auf eine Pflanze oder ein Vermehrungsmaterial davon ausbringt.

2. Verfahren nach Anspruch 1, wobei das Cloquintocet-Mexyl und das Difenoconazol gleichzeitig auf die Pflanze oder das Vermehrungsmaterial ausgebracht werden.

3. Verfahren nach Anspruch 1 oder Anspruch 2, wobei das Cloquintocet-Mexyl und das Difenoconazol mittels einer Zusammensetzung, die eine Mischung aus dem Cloquintocet-Mexyl und dem Difenoconazol umfasst, ausgebracht werden.

4. Verfahren nach Anspruch 1, wobei das Cloquintocet-Mexyl auf die Pflanze oder das Vermehrungsmaterial ausgebracht wird, bevor das Difenoconazol ausgebracht wird.

5. Verfahren nach einem der vorhergehenden Ansprüche, wobei die phytotoxische Wirkung ein Vergilben und/oder Braunwerden der Blätter der Pflanze verursacht.

6. Verfahren nach einem der vorhergehenden Ansprüche, wobei das Cloquintocet-Mexyl und das Difenoconazol in einem Verhältnis Difenoconazol: Cloquintocet-Mexyl von zwischen 1:50 und 50:1 ausgebracht werden.

7. Verfahren nach einem der vorhergehenden Ansprüche, wobei die Pflanze oder das pflanzliche Vermehrungsmaterial eine Getreidepflanze oder ein Getreidepflanzenvermehrungsmaterial ist.

8. Verfahren nach Anspruch 7, wobei das Getreide Weizen ist.

9. Verwendung von Cloquintocet-Mexyl für das "Safening" der Phytotoxizität von Difenoconazol.

**Revendications**

1. Méthode de protection contre l'effet phytotoxique du difénoconazole, comprenant l'application à une plante ou un matériel de propagation de celle-ci, de cloquintocet-mexyl et dudit difénoconazole.

2. Méthode selon la revendication 1, dans laquelle ledit cloquintocet-mexyl et ledit difénoconazole sont appliqués simultanément à ladite plante ou audit matériel de propagation.

3. Méthode selon la revendication 1 ou la revendication 2, dans laquelle ledit cloquintocet-mexyl et ledit difénoconazole sont appliqués via une composition comprenant un mélange dudit cloquintocet-mexyl et dudit difénoconazole.

4. Méthode selon la revendication 1, dans laquelle ledit cloquintocet-mexyl est appliqué à ladite plante ou audit matériel de propagation préalablement à l'application dudit difénoconazole.

5. Méthode selon l'une quelconque des revendications précédentes, dans laquelle ledit effet phytotoxique provoque un jaunissement et/ou un brunissement des feuilles de la plante.

6. Méthode selon l'une quelconque des revendications précédentes, dans laquelle ledit cloquintocet-mexyl et ledit difénoconazole sont appliqués selon un rapport compris entre 1:50 et 50:1 de difénoconazole/ cloquintocet-mexyl.

7. Méthode selon l'une quelconque des revendications précédentes, dans laquelle ladite plante ou ledit matériel de propagation végétal est une plante de type céréale ou un matériel de propagation de plante de type céréale.

8. Méthode selon la revendication 7, dans laquelle ladite céréale est le blé.

9. Utilisation de cloquintocet-mexyl afin d'offrir une protection contre la phytotoxicité du difénoconazole.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070298966 A
- WO 2009000407 A
- WO 2007065843 A
- WO 2010063700 A
- WO 2007048556 A
- WO 2009056333 A
- EP 0365484 A
- WO 2007008580 A
- WO 2010015337 A


### Non-patent literature cited in the description


- **F. MONTFORT et al.** *Pesticide Science,* 1996, vol. 46 (4), 315-322
- The Pesticide Manual'' [The Pesticide Manual - A World Compendium. The British Crop Protection Council
- The Pesticide Manual. British Crop Production Council
- The Pesticide Manual
- *CHEMICAL ABSTRACTS,* 91315-15-0
- *CHEMICAL ABSTRACTS,* 99257-43-9
- **COLBY, S.R.** Calculating synergistic and antagonistic responses of herbicide combination. *Weeds,* 1967, vol. 15, 20-22